# EUROPEAN PATENT SPECIFICATION

(11) **EP 0 909 976 B1**
(45) Date of publication and mention of the grant of the patent: **27.07.2016**
(21) Application number: 97402424.2
(22) Date of filing: 14.10.1997
(51) Int. Cl.: G02F 1/1368, G09G 3/36, G02F 1/135, G02F 1/133

(54) **A display device comprising an image generating panel and illumination means on the rear side of the panel**
Anzeigevorrichtung mit einer bilderzeugenden Tafel und einer Beleuchtungsvorrichtung an deren Rückseite
Dispositif d'affichage comportant un panneau générateur d'images et un moyen d'éclairage par la surface arrière

(43) Date of publication of application: 21.04.1999
(73) Proprietor: THOMSON multimedia, 92648 Boulogne Cédex (FR)
(72) Inventor: Chikazawa, Yoshiharu, 92648 Boulogne Cedex (FR)
(74) Representative: Huchet, Anne

(56) References cited:
- "LIQUID CRYSTAL DISPLAY UTILIZING PHOTOSENSOR FEEDBACK" IBM TECHNICAL DISCLOSURE BULLETIN, vol. 34, no. 2, 1 July 1991, pages 479-480, XP000211180
- PATENT ABSTRACTS OF JAPAN vol. 018, no. 211 (P-1726), 14 April 1994 & JP 06 011690 A (ROHM CO LTD), 21 January 1994,
- PATENT ABSTRACTS OF JAPAN vol. 014, no. 581 (P-1147), 26 December 1990 & JP 02 251825 A (MATSUSHITA ELECTRIC IND CO LTD), 9 October 1990,

## Description

The invention relates to a display device comprising an image generating panel and illumination means on the rear side of the panel.

The invention will be described with reference to liquid crystal displays (LCD). However it is not limited to such displays.

A LCD comprises a panel having a plurality of elementary cells, each of which including a picture element (pixel). The optical transmissivity of each pixel is controlled in accordance with the image (picture) to be displayed. More precisely, each pixel has a transmissivity corresponding to the luminance (content) of the picture at its location.

In direct view LCDs illumination means are provided on the rear side of the panel in order to allow the view of the picture on the front side of the panel.

In projection type LCDs illumination means are also provided on the rear side of the panel in order to allow the projection of a picture on a screen installed opposite to the illumination means with respect to the panel.

The intensity of light reaching the panel must be as uniform as possible. If this condition is not fulfilled, the observed or projected image appears not uniform.

Up to now, no satisfactory solution has been proposed to obtain a good uniformity of illumination of direct view LCDs. In general, the illumination means of such direct view LCDs comprise fluorescent tubes which transmit less power at their ends than on their medium part; the curved parts of such tubes transmit also less power.

So, to increase uniformity, it has been proposed in an article intitled "Liquid crystal display utilizing photosensor feedback" of IBM TECHNICAL DISCLOSURE BULLETIN vol. 34, N° 2, 1st July 1991, pages 479-480, a solution with photodetection means associated with LCD. This document discloses all the features of the preamble of claim 1 in combination.

In projection type LCDs, it is possible to achieve a good uniformity of illumination with optical elements installed between a projection lamp and an objective lens, at the rear side of the panel. An optical element is, for instance, an array of small lenses called a "fly eye lens" wherein each small lens distributes the light of the projector on the whole surface of the objective lens. It is also possible to use an optical integrator. However these solutions are expensive.

An object of the invention is to provide a display device of the direct view type, more particularly a liquid crystal display, wherein the observed or projected image appears with a uniform luminosity.

Another object of the invention is to provide inexpensive means for improving the luminosity of the observed or projected image in a display device of the direct view type or of the projection type.

The display device according to the invention is as defined in claim 1. It is of the type comprising, preferably in the image generating panel, photo-detection means providing signals representing the intensity of light received by the panel in several of its areas, these signals being used to control the optical transmissivity of pixels in the areas in such a way that the observed or projected image appears uniformly illuminated.

Contrary to prior art solutions, this structure improves the uniformity of illumination inside the image forming panel. Therefore the invention may be used for both types of display devices, i.e. the direct view type and the projection type. Moreover, with the invention, it is possible to limit the volume of the device, and photo-detection means and control means may be cheaper than the special lenses or optical integrators of the prior art LCD projectors.

For instance, in a LCD, each pixel is generated by a liquid crystal cell in series with a switching element, such as a switching transistor. The optical transmissivity of the liquid crystal cell is controlled by a luminance signal which is provided to this cell through the switching element. Classically, this switching element is conducting when the pixel is selected for display and non conducting when this pixel is not selected. According to the invention, the conductivity of the switching element depends on the intensity of light received by a photo-detector element located in the neighborhood of the liquid crystal cell. In other words, the conductivity of the switching element is modulated by the intensity of the received light.

According to the invention, one photo-detector element controls the transmissivity of several picture elements of the image forming panel in a given area.

The photo-detector element may be a photo transistor, a photo resistor or a photo diode connected to the control electrodes of the switching elements in series with the liquid crystal cells in the given area.

Other features and advantages of the invention will appear with the description of one embodiment, this description being made in connection with the following drawings wherein:
Figure 1 is a schematic drawing of a transmissive type display panel of an embodiment of the present invention.
figure 2 represents picture elements of a LCD panel of the type represented on figure 1.
figure 3 represents the elementary cell of a LCD panel according to another example not part of the invention,
figure 4 is a drawing similar to figure 3, but for another example not part of the invention, and
figure 5 represents an alternative example of figure 4 not part of the invention.

The examples of the invention which will be described in connection with the drawings correspond to a liquid crystal display of the transmissive type which is either of the direct view type or of the projection type.

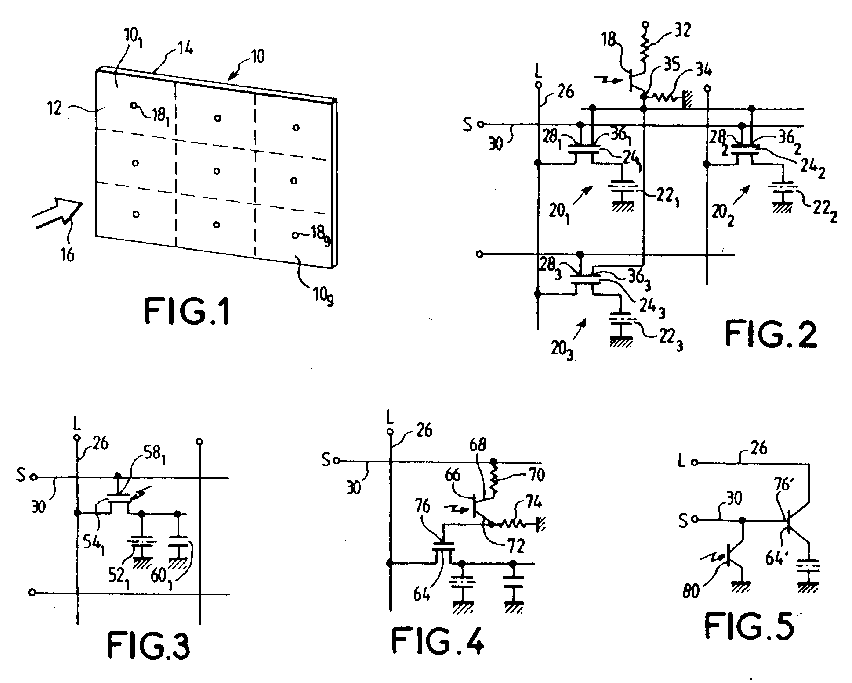

In the embodiment represented on figure 1 a LCD display comprises an image forming panel 10 of the transmissive type having a plurality of elementary cells. This panel 10 comprises a rear face 12 and a front face 14. Illumination means (not represented) provide illumination light 16 on the rear side 12.

In this example, the panel 10 has a general rectangular shape. It is divided in nine areas 10₁, ..., 10₉, also with a rectangular shape.

In each area, a photo-detector element 18₁, ..., 18₉ is provided. The photo-detector elements 18₁, ..., 18₉ control the transmissivity of the image forming elements or picture elements of the corresponding area.

Figure 2 represents an example of a photo-detector element 18 controlling several elementary cells 20₁, 20₂, 20₃,

Classically, each elementary cell comprises a liquid crystal (LC) cell 22ᵢ in series with a switching element, such as a transistor 24ᵢ. One electrode of the LC cell 22ᵢ is connected to ground and its other electrode is connected, through switching element 24ᵢ, to a line 26 receiving a luminance signal L.

The transistor 24ᵢ has a control electrode 28ᵢ which is connected to a switching line 30 receiving a switching signal S. The switching signal S controls the conductivity of transistor 24ᵢ and of other transistors on the same line of panel 10 in such a way that this transistor 24ᵢ is off (non conductive) when the corresponding line is not selected by a scanning device (not represented) and this transistor 24ᵢ is conductive when the corresponding line is selected by the scanning device. The intensity of light transmitted by the panel 10 depends on the intensity of the signal L provided by line 26.

The photo-conductor element 18 provides a further control of the transmissivity of the panel 10. To this end, the photo-detector element controls the conductivity of transistors 24₁, 24₂, 24₃, etc.

The photo-conductor element 18 is, in this example, a photo-conducive transistor having one terminal connected to a reference voltage (not shown) through a first resistor 32 and another terminal connected to a second control electrode 36₁, 36₂, 36₃, ... of switching transistors 24₁, 24₂, 24₃, ... The terminal 35 of transistor 18 which is connected to control electrodes 36ᵢ of the switching transistors 24ᵢ is also connected to ground through a second resistor 34.

As can be seen on figure 2, in this embodiment, the switching transistors 24ᵢ are two-gate transistors.

The control provided by photo-transistor 18 is such that the conductivity of transistors 24ᵢ, 24ⱼ decreases when the intensity of the light received by transistor 18 increases. Contrary to classical liquid crystal displays where the switching transistors 24 have only two states - conductive or non-conductive - in the present embodiment the switching transistors operate in an analog way, i.e. their conductivity may vary between zero and maximum conductivity.

In the configurations not according to the invention represented on figures 3, 4 and 5, each elementary cell comprises a photo-conductive element.

In the example of figure 3, the liquid crystal cell 52₁ is in series with switching transistor 54₁ ; the control electrode 58₁ of transistor 54₁ is directly connected to line 30. One terminal of transistor 54₁ is connected to the cell 52₁ and the other terminal of this transistor 54₁ is connected to the line 26. A static capacity 60₁ is in parallel with the cell 52₁. According to the invention, the transistor 54₁ has photo-resistive properties in such a way that its conductivity decreases when the light it receives increases.

In the example represented on figure 4, like in figure 3, the conductivity of each switching transistor 64 is controlled individually. However, this switching transistor is controlled by a separate photo-conductive transistor 66. One terminal 68 of this photo-conductive transistor 66 is connected to line 30 through a resistor 70 and its second terminal 72 is connected to ground through another resistor 74. The second terminal 72 of transistor 66 is connected to the control electrode 76 of switching transistor 64.

The photo-conductive transistor 66 and the resistors 70 and 74 form a transistor inverter circuit. Therefore when the transistor 66 receives a high intensity of light, the voltage on electrode 72 is close to the voltage of the ground and the switching transistor 64 is non-conductive. If the transistor 66 receives a low intensity of light, the voltage of electrode 72 is close to the voltage of line 30 and, in this case, the conductivity of transistor 64 is maximum when line 30 receives a switching signal. Between these two extreme states, the conductivity of transistor 64 depends on the intensity of light received by photo-transistor 66.

Figure 5 represents a variation of the example represented on figure 4.

A photo-transistor 80 is connected between line 30 and ground. If photo-transistor 80 is strongly illuminated, it is fully conductive and, therefore, the switching signal S is shunted to the ground and switching transistor 64' remains non-conductive. If the photo-transistor 80 receives a small quantity of light, it is not conductive and, therefore, switching transistor 64' can be fully controlled by the switching signal S. Between these extreme values of illumination, the conductivity of photo-transistor 80 controls the conductivity of switching transistor 64' and this conductivity depends on the intensity of light received by photo-transistor 80.

Although in the embodiments and examples described in reference with the drawings, the photo-detecting elements are transistors, other photo-elements may be used such as photo-resistors, photo-diodes, etc.

The area occupied by each photo-detecting element must be such that it does not reduce significantly the light transmitted by the panel 10. This condition can be easily fulfilled because such elements will be realized with a reduced area.

## Claims

1. A display device comprising an image generating panel (10) including a plurality of picture forming elements (22₁), each picture forming element being in series with a switching element (24₁) having a control electrode (28;) arranged to receive a switching signal (5), wherein the switching element is arranged to transmit a luminance signal (L) to the picture forming element as a function of the switching signal (5) in such a way that the optical transmissivity of each picture forming element is controlled in view of the content of the image at the location of this element, said display device comprising also illumination means on the rear side (12) of the panel, and photo-detection means (18) arranged to control the optical transmissivity of the picture forming elements in such a way that the displayed image appears with a uniform illumination, wherein the photo-detection means comprises a plurality of photo-detector elements, **characterised in that** each photo-detector element is arranged to control the conductivity of the switching elements (24₁, 24₂, 24₃) located in said given area of the panel, thereby controlling the transmissivity of all picture forming elements located in said given area, wherein each switching element in the given area comprises a further control electrode which is connected such as to receive a signal from the photo-detector element.

2. A display device according to claim 1 **characterized in that** the photo-detection element comprises one of the following elements: a photo-transistor, a photo-resistor and a photo-diode.

3. A display device according to any of the previous claims, wherein the display device is a liquid crystal display device of the projection type.

4. A display device according to any of claims 1 or 2, wherein the display device is a liquid crystal display device of the direct view type.

## Patentansprüche

1. Anzeigevorrichtung, die einen Bilderzeugungsbildschirm (10) umfasst, der mehrere bildbildende Elemente (22₁) enthält, wobei jedes bildbildende Element mit einem Schaltelement (24₁), das eine zum Empfangen eines Schaltsignals (s) ausgelegte Steuerelektrode (28ᵢ) aufweist, in Reihe geschaltet ist, wobei das Schaltelement dafür ausgelegt ist, in Abhängigkeit von dem Schaltsignal (s) in der Weise ein Helligkeitssignal (L) an das bildbildende Element zu senden, dass die Lichtdurchlässigkeit jedes bildbildenden Elements angesichts des Inhalts des Bildes an dem Ort dieses Elements gesteuert wird, wobei die Anzeigevorrichtung außerdem ein Beleuchtungsmittel auf der Rückseite (12) des Bildschirms und ein Photodetektierungsmittel (18), das dafür ausgelegt ist, die Lichtdurchlässigkeit der bildbildenden Elemente in der Weise zu steuern, dass das angezeigte Bild mit einer gleichförmigen Beleuchtung erscheint, umfasst, wobei das Photodetektierungsmittel mehrere Photodetektorelemente umfasst, **dadurch gekennzeichnet, dass** jedes Photodetektorelement dafür ausgelegt ist, die Leitfähigkeit der in dem gegebenen Bereich des Bildschirms angeordneten Schaltelemente (24₁, 24₂, 24₃) zu steuern und dadurch die Durchlässigkeit aller in dem gegebenen Bereich angeordneten bildbildenden Elemente zu steuern, wobei jedes Schaltelement in dem gegebenen Bereich eine weitere Steuerelektrode (36ᵢ) umfasst, die in der Weise verbunden ist, dass sie ein Signal von dem Photodetektorelement empfängt.

2. Anzeigevorrichtung nach Anspruch 1, **dadurch gekennzeichnet, dass** das Photodetektierungselement eines der folgenden Elemente umfasst: einen Phototransistor, einen Photowiderstand und eine Photodiode.

3. Anzeigevorrichtung nach einem der vorhergehenden Ansprüche, wobei die Anzeigevorrichtung eine Flüssigkristallanzeigevorrichtung vom Projektionstyp ist.

4. Anzeigevorrichtung nach einem der Ansprüche 1 oder 2, wobei die Anzeigevorrichtung eine Flüssigkristallanzeigevorrichtung vom Direktbetrachtungstyp ist.

## Revendications

1. Un dispositif d'affichage comprenant un panneau générateur d'images (10) comprenant une pluralité d'éléments formant une image (22₁), chaque élément formant une image étant placé en série avec un élément de commutation (24₁), présentant une électrode de commande (28ᵢ) agencée pour recevoir un signal ( S) de commutation, où l'élément de commutation est agencé pour transmettre un signal de luminance (L) vers l'élément formant une image comme fonction du signal de commutation ( S) de sorte que la transmissivité optique de chaque élément formant une image est contrôlée en fonction du contenu de l'image à l'emplacement de cet élément, ledit dispositif d'affichage comprenant également un moyen d'illumination en face arrière (12) du panneau et un moyen de photo-détection (18) agencé pour commander la transmissivité optique des éléments formant l'image de sorte que l'image affichée apparaît avec une illumination uniforme, dans lequel le moyen de photo-détection comprend une pluralité d'éléments photo-détecteurs, **caractérisé en ce que** chaque élément photo-détecteur est agencé pour commander la conductivité des éléments de commutation (24₁, 24₂, 24₁) situés dans ladite zone du panneau, contrôlant ainsi la transmissivité de tous les éléments formant l'image situés dans ladite zone donnée où chaque élément de commutation de la zone donnée comprend une électrode de commande supplémentaire (36ᵢ) qui est raccordée afin de recevoir un signal provenant de l'élément photo-détecteur.

2. Un dispositif d'affichage selon la revendication 1 **caractérisé en ce que** l'élément de photo-détection comprend un des éléments suivants : un phototransistor, une photorésistance et une photodiode.

3. Dispositif d'affichage selon l'une des revendications précédentes dans lequel le dispositif d'affichage est un dispositif d'affichage à cristaux liquides de type projection.

4. Dispositif d'affichage selon l'une quelconque des revendications 1 ou 2, dans lequel le dispositif d'affichage est un dispositif d'affichage à cristaux liquides de type lecture directe.
